# EUROPEAN PATENT SPECIFICATION

(11) **EP 2 605 956 B1**
(45) Date of publication and mention of the grant of the patent: **09.01.2019**
(21) Application number: 11817803.7
(22) Date of filing: 18.08.2011
(51) Int. Cl.: B63B 25/22, B63J 2/08, B62D 53/06, B62D 13/00

(54) **A CONTAINER AND CAR CARRYING REEFER VESSEL AND A TRANSPORT DRIVE UNIT**
BEHÄLTER UND WAGEN MIT EINEM KÜHLGEFÄSS UND EINER TRANSPORTANTRIEBSEINHEIT
NAVIRE FRIGORIFIQUE POUR TRANSPORT DE CONTENEURS ET DE VOITURES ET UNITÉ D'ENTRAÎNEMENT DE TRANSPORT

(30) Priority: 20.08.2010 DK 201070368
(43) Date of publication of application: 26.06.2013
(73) Proprietor: Reefer Intel AG, 6052 Hergis (CH)
(72) Inventor: SKOV, Birger Lindberg, DK-2840 Holte (DK)
(74) Representative: AWA Denmark A/S
(86) International application number: PCT/DK2011/050313
(87) International publication number: WO 2012/022355

(56) References cited:
- EP-A1- 0 618 127
- WO-A1-95/18037
- WO-A1-2009/058090
- DE-A1- 1 630 626
- DE-A1-102004 048 663
- GB-A- 2 037 414
- JP-A- S58 221 793
- JP-A- 2000 085 683
- JP-U- S63 133 492
- US-A- 6 105 525
- US-B1- 6 230 640

## Description

The present invention relates to a refrigerated-cargo vessel for transporting fruit and like foodstuffs, said vessel having a roll-on/roll-off ramp and a plurality of decks including an upper weather deck, and two or more lower decks for receiving palletised cargo, where at least an area of the lower decks is provided with grating allowing ventilation of cargo placed on the grating. The invention also relates to a cargo platform for loading cargo and to a method of loading cargo for sea transport.

Vessels having such a ramp are also known as RO-RO ships. In a RO-RO ship the cargo is driven on board by trucks via the ramps instead of being lifted on board using a crane and lowered through a hatch in the deck and stowed away. US patent 6,105,525 describes such a vessel where lower decks are used for heavy-weight cargo and decks higher up in the vessel are used for lighter cargo, typically cars, and these latter decks are made of a fixed grillage structure instead of the traditional plate-shaped decks constructions. The grillage structure replaces the traditional deck structure and is a fixed structure within the ship hull.

Refrigerated-cargo vessels, also known as reefers, are used to transport fruits, vegetables and like perishable commodities, which require temperature-controlled transportation, from ports close to the place of production to ports in or near the importing country, typically from one continent to another. Documents GB2037414, US6230640, JP358221793 and US20060207284 describe a series of cargo carrier refrigeration systems.

The trade in fruit and vegetables is, to a large degree, of a one-way nature and for reefers it has therefore proven difficult to not sail empty when returning to the harbours where fruit is loaded.

Cars are one commodity that has been tried transported on board reefers during the return voyage to fruit producing regions of the world, an example being European cars on banana ships returning to South or Central America. This, however, has involved problems because the cars had to be lifted on board and lowered into the cargo holds, and broken glass and other possible debris from damaged cars ended up in the next load of fruit. The fruit is typically transported on pallets in the very same boxes that are used for displaying the fruit in supermarkets and shops, and in case of glass remains in the fruit all boxes on the affected pallets were discarded.

When transporting fruit, vegetables and other commodities that continue to respire post harvest, also known as live cargo, the use of reefers has the advantage that the atmosphere surrounding the cargo may be conditioned. This not only helps prevent desiccation or rot, but also allows the biological processes associated with ripening to be controlled with the desired precision, something which can also be achieved in containers, but at rather high costs. In the reefers used for fruit transportation gratings are used to keep the cargo elevated above the deck surface so that air/gas may circulate through the fruit boxes.

Another logistic problem associated with the transport of fruit and vegetables on reefers is the time and number of persons required for loading and unloading the cargo. The typical loading time for conventional reefers may be reduced to thirty-six hours for a standard size banana transport when employing forty to fifty persons, and even with such a shortening in time the schedule is very tight due to narrow shipping windows.

It is therefore an object of the present invention to provide a refrigerated-cargo vessel and a method for transportation, which at the same time allows for efficient loading and unloading of non-containerised fruit and vegetables and for safe transportation of other types of cargo, such as cars.

With a view to achieving this, the refrigerated-cargo vessel is characterized in that the upper weather deck is equipped for receiving containers, and that the grating is part of removable cargo platforms transportable via the ramp by transport drive units, each platform comprising at least an upper surface, side surfaces, and legs or wheels, which upper surface and optionally at least one of the side surfaces comprise through-going ventilation openings.

With this design, instead of having to bring the pallets of fruit or like commodities on board one by one or four at a time using pallet cages, the pallets are arranged on the platforms on shore and the fully loaded platforms may then be taken on board the ship. The platforms may be loaded at any time between arrival of the commodity at the harbour and the time of loading the cargo onto the ship, which entails a more continuous workload for the personnel. Likewise, unloading of the individual commodities may now to a large extent take place on shore after the cargo platforms have been driven off the vessel.

The placing of pallets with fruit boxes on the platforms in a highly compact manner, and the possibility of arranging the platforms on the vessel in a very compact manner results in a very significant improvement of the capacity of the vessel. In comparison with the existing vessels for carrying refrigerated fruit the capacity of the present vessel is much higher, and the containers on the weather deck add to the capacity. And because of the more efficient loading and unloading the requirement of staff for loading and unloading is reduced from 40 to 50 persons to less than 25 persons.

The loading and unloading onto and from the platforms of course necessitates the provision of a relatively large number of platforms since a full set of platforms for a whole loading operation may be required on shore in a harbour. However, as simulations have shown an expected decrease in the time needed for loading and unloading the vessel of up to 80%, these expenses are easily justified and recovered.

The platforms may be loaded with any type of commodities, including cars, but thanks to the ventilation openings, which allow the air circulation needed for heating, cooling and controlling the atmosphere surrounding the cargo, they are particularly well suited for fruits and vegetables.

When shipping cars, the arrangement of these on platforms, where they are preferably strapped down, means that they do not need to be driven on board by their own power and that they are largely prevented from damages during the loading. Accordingly, the typical problems with crushed side-view mirrors etc. may be eliminated almost entirely.

It is an advantage that the grating is unloaded together with the cargo, as the platforms are driven out of the vessel and onto the quay. The cleaning of the decks is thus made considerably easier and maintenance of the grating is virtually eliminated, since broken or fouled platforms are simply taken aside once unloaded on shore.

For the sake of simplicity and to allow even ventilation, draining etc. the openings in the upper surface of the platforms are distributed substantially evenly, but more complex configurations are also possible.

In an embodiment the cargo platforms are located immediately next to one another in rows extending in the transverse direction of the vessel, and more than half, and possibly up to all, of the cargo platforms in the rows are transported in the vessel without using transverse lashings for securing the individual platform during the transport. It saves a lot of time during loading and unloading operations when the use of lashings may be minimized or even avoided, and because of the close positioning of the cargo platforms on the decks they support one another so that many lashings may be dispensed with.

In an embodiment suitable for mobile platforms provided with permanent wheels, the surface of any of the lower decks is provided with retainers for fixation of the platforms in the longitudinal direction of the vessel, and the individual platform is provided with a projection that can engage with the retainer in the deck. This provides a very simple manner of also securing the platforms against movements in the longitudinal direction of the vessel. These retainers may be different kinds of snap locks etc., but profiling in the form of projections and/or indentations having the negative pattern to the underside of the platform provides for a very reliable and robust solution. Regardless of the design, the retainers should preferably allow for fixation of platforms of different sizes and types without the need for modification of the deck. Platforms without wheels need no such projections and retainers.

The platform may be a box structure having a substantially continuous upper surface, lower surface and side surfaces, but it is to be understood that a more open structure is also within the scope of the claims. As an example the side surfaces constituting the ends of the platform may be open, this opening constituting one big ventilation opening and at the same time allowing easy access for trucks etc.

Platforms may have a height of approximately 50 to 90 cm, such as from 50 to 70 cm, or from 70 to 90 cm, and a pallet packed following the high-cube standard has a total height of 2.45 m resulting in a total height of the loaded platform of approximately 2.95 to 3.35 m. Platforms may alternatively have a height of only 30 to 70 cm and be provided with wheels in the back end so that the front end only needs to be lifted a short distance, such as 5 mm or 10 mm in order to transport the platform. It is preferred that the free height from the deck surface to fixed structures above the deck is in the range between 2.8 and 3.7 m in the lower decks, such as in the range between 3.3 and 3.7 m, or even in the range between 3.0 and 3.3 m, when the platform has fixed legs in the back end, and preferably in the range between 2.8 and 3.4 m, or in the range between 2.8 and 3.2 m when the platform has wheels in the back end. The free height can be in the range between 3.1 to 3.3 m in order to provide some flexibility in the measures of the platforms.. The free height of approximately 15 cm above the cargo is used when the back end of the platform is lifted for being driven into or out of the vessel. By minimizing the free height, which may be possible when the platform has fixed wheels at its back end, the air conditioning may operate with a minimum of loss, and the very low free height is also effective to maintain a low centre-of-mass position in the loaded vessel. This makes it possible to sail with more loaded containers on the weather deck. Even smaller heights may of course do, if using pallets loaded according the other standards, but this is less preferred as is makes the vessel less versatile. The combined effects of utilizing platforms for pallets and adapting the free height on the lower decks to be in the stated range allow the vessel to carry about 40% more pallets with fruit than a prior art reefer vessel of comparable length.

In order to further optimise the utilisation of the space available within the hull, a hatch may be provided at the opening above one or more internal ramps, so that cargo may be stored on top of the hatch once the deck below it has been filled. A similar effect may be achieved by making at least one internal ramp moveable between a first position, in which it is substantially in plane with one of the decks, and a second position, in which it is inclined to interconnect two decks. Once the deck receiving platforms via the ramp has been filled the ramp may be activated to be positioned in the first position and the space thus made available may be used for cargo.

As palletised cargo is generally not weather proof, the uppermost deck, also known as the weather deck, is loaded with containers. On traditional RO-RO vessels these are brought on board via the same ramp as the rest of the cargo, meaning that the containers have to be loaded onto the vessel before the lower decks are fully loaded. Likewise, on traditional reefers where the palletised cargo is lowered through hatches in the uppermost deck by means of a crane, the palletised cargo must be loaded before the container deck is fully loaded. In both cases the loading of the vessel has to be performed in a very specific order, which is not always optimal seen from a logistic point of view, and the ramps and cranes tend to become 'bottlenecks'. Evenly important, however, is that the intended order of unloading has to be considered, since one type of cargo has to be removed in order to get access to the other, and this requires careful planning. It is therefore preferred that the container deck (upper weather deck) is without hatches and that internal ramps interconnect only lower decks, so that access to the internal decks is independent of the container deck and vice versa. In this way the RO-RO ramp is reserved for the cargo going onto or off the lower decks and the weather deck is loaded and unloaded by means of at least one container crane. Loading and unloading of containers may thus be performed independently of the handling of the platforms. This allows container handling to be carried out simultaneously with the handling of platforms, and as a result the required time in harbour is shortened.

The roll-on/roll-off ramp may occasion some bottleneck effect, and in order to minimize this the RO-RO ramp on vessels comprising at least three lower decks, including a bottom deck, a top deck and one or more intermediate decks, is advantageously arranged so that it gives access to one of the intermediate decks. Once having left the roll-on/roll-off ramp the cargo may then be divided into three sub-streams, one going up, another going down and a third filling the deck where the RO/RO ramp is located, thereby minimising the bottleneck effect. It is of course also possible to provide more than one RO-RO ramp, but this involves additional costs.

The cargo platforms may in principle be of any configuration allowing them to be taken in and out of the ship while carrying the cargo and at the same time permitting air/gas to circulate around the cargo. To fulfil the latter requirement the openings in the upper surface may preferably be distributed substantially evenly.

In an embodiment the vessel is in intercontinental charter transporting fruit, such as bananas, loaded on the platforms, and containers with either fruits or other cargo from a first continent to a second continent, and transporting cars loaded on the platforms, and possible other cargo in the containers, from the second continent to the first continent. This solves the long-standing problems with reefer transport of fruit where the capacity of the vessel was poorly utilized in the past during the return voyage to the continent where the fruits are grown. By loading the cars onto platforms the cars will not be damaged during loading or unloading or while present on the vessel, and even if damage to the cars should occur on the vessel then the broken glass or other debris will end up on the deck with no risk of ending up among fruits loaded onto the platforms.

One embodiment, which is efficient, reliable and relatively cheap, is to make at least the upper surface of the platform from a grate, which is a standard commodity and therefore available all over the world.

The platforms should be easy to keep clean and resistant to the atmospheric conditions encountered. They are therefore advantageous made wholly or partially of steel painted with marine paints or made of a corrosion retarding material such as aluminium, stainless or galvanised steel, plastic, composites or combinations thereof, an example being a plastic-covered steel frame with an aluminium grate serving as the upper surface.

To aid the transportation of the platforms in and out of the ship, they may in an embodiment comprise one or more wheels at the lower surface, preferably arranged at an end. Such wheels may be mounted in a simple manner or made retractable, so that they may be hidden within the platform when not in use. In addition, they may be provided with brakes and one or more of them may be steerable or able to turn.

When transporting the loaded platforms on the vessel it may be advantageous that the cargo is secured. This particularly applies when transporting cars, and the platforms may therefore comprise at least one fastening device for securing a cargo item to the upper surface.

In an embodiment the lower decks in the vessel are separated into at least two different ventilation zones, preferably by transverse bulkheads, which may have doors or be partly or wholly retractable during loading or unloading. The separation into different ventilation zones allows the cargo to be treated differently in terms of temperature, ventilation air amounts, and/or composition of the air or gas used for ventilation. In this manner it becomes simple to carry different types of fruits or vegetables, as the climate in the ventilation zone can be adjusted. There are preferably three, four or more such separate ventilation zones on the vessel.

In an embodiment the vessel has at least one ventilation system, which from one side of the decks has ventilation air supply openings in the areas between the upper side of the deck and the upper surface of platforms located on the same deck. This allows for blowing the ventilation air in, directed in the transverse direction of the vessel, and to supply several or all lower decks from one and the same ventilation system. There is preferably at least one ventilation system for every separate ventilation zone, such as two ventilation systems per zone.

The present invention also relates to a transport drive unit for a refrigerated-cargo vessel, the transport drive unit having an engine part and a trailer part, which engine part has a coupling device, and which trailer part is a cargo platform having an upper surface, side surfaces, legs or wheels, and a goose-neck with a coupling device at one end for coupling to the coupling device on the engine part so that the goose-neck may swivel with respect to the engine part, characterized in that the upper surface of the trailer part and optionally at least one of the side surfaces comprise through-going ventilation openings, and that the engine part is electrically driven and has at least one exchangeable battery. By including in the platform the grating required for ventilating fruit stored on the platform during the voyage many advantages are obtained. First of all it becomes possible to load the pallets carrying fruit boxes onto the platforms while these are on shore. This may be performed well in advance of arrival of the vessel at the port and thus the loading may be prepared days in advance just by placing the platforms in the store houses where previously only the pallets with fruit boxes were placed. As typically 20 pallets, each loaded with 48 or 54 fruit boxes, are loaded onto and stored on a single platform prior to arrival of the vessel, the loading of the vessel is greatly improved when the vessel is loaded with the platforms, because previously the pallets were loaded one by one into cages taking four pallets, and then the cages were lifted onboard the vessel and the pallets located on the deck. Secondly, the grating is removed from the deck of the vessel as the platform is unloaded. Previously, pallets were unloaded and then the grating had to be shifted away manually. Thirdly, the number of persons needed to load and unload the vessel with fruit is significantly reduced, such as from about 40 to 50 persons to about 20 persons. In addition, the loading and unloading of the vessel is much faster so the time in port is shortened. The transport drive unit used for transporting the platforms onto or off the vessel is electrically driven and has at least one exchangeable battery. Although the individual platform has a weight of about 23 t when loaded with 20 pallets and has to be driven up the ramp the electrical drive is preferred because no exhaust fumes are expelled from such a transport drive unit.

The loading of the pallets onto the platform provides the further advantage that at least one bendable strip or other securing means can be located around and tightened to the outer periphery made up of sides of fruit boxes located on the pallets. In this manner the fruit boxes on the platform behaves like an integral unit of rather large strength because the strapped boxes support one another.

In one embodiment a set of wheels is mounted on an axle at a back end of the frame so that they can turn about a vertical axis controlled by the driver of the engine part. The grating need not be so strong in order to support the pallets with boxes of fruit, but in order to use the same platforms for transport of fruit and transport of cars, where fruit is loaded onto the platforms on one voyage and cars are loaded onto the platforms on the return voyage, it is an advantage if the grating can withstand the axle loading of ordinary cars for private use. As an alternative, the platform may have two fixed and strong, elongate areas for supporting car wheels and intermediate areas filled with grating. This may however cause somewhat uneven ventilation in the area just above the elongate areas.

As the platforms will often be stored together with containers, they may advantageously be given the same width and length as a standard container, e.g. a length of approximately 6.1 m or 12.2 m and a width of approximately 2.4 m, corresponding to a 20 or 40 foot ISO container, respectively. Other measures of the platforms are possible, e.g. a length of approximately 12.30 m and a width of approximately 2.05 m.

In the following the invention will be described in closer detail with reference to the schematic drawings, where
Fig. 1 illustrates a longitudinal cross-section of a vessel according to the invention,
Figs. 2-6 illustrate decks 1-5 of the vessel in Fig. 1 seen from above,
Fig. 7 illustrates a midship cross-section of the vessel in Fig. 1, where the left hand side illustrates storing of high-cube pallets on platforms and the right hand side illustrates cars stored on the platforms on the same decks, thus illustrating how high-cube pallets may be carried on one voyage and cars on the next, both of course suitable for filling the entire deck,
Fig. 8 illustrates a platform according to the invention seen from the side,
Fig. 9 depicts the platform in Fig. 8 seen from above,
Fig. 10 depicts the platform in Fig. 8 seen from the end,
Fig. 11 illustrates a transport drive unit with trailer used for loading and unloading platforms onto and off the vessel, and
Figs. 12 and 13 illustrate a trailer inserted under a platform while the platform is standing on the ground or deck, and the same trailer lifting the platform.

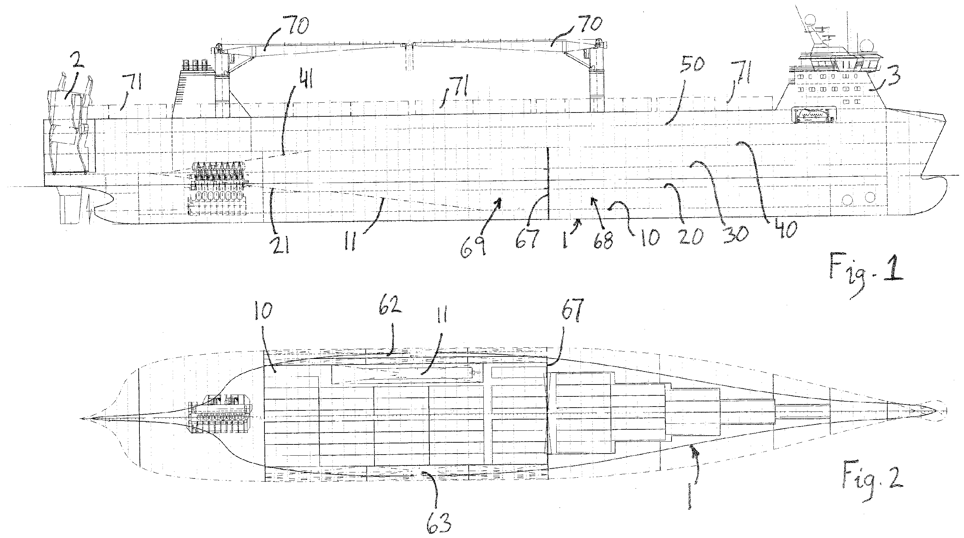

An example of a reefer vessel according to the invention, comprising a hull 1, a roll-on/roll-off ramp 2 and a superstructure 3 is shown in Fig. 1. Here, four lower cargo decks 10, 20, 30, 40 are contained within the hull and a weather deck constitutes a fifth cargo deck 50, which is upwards open.

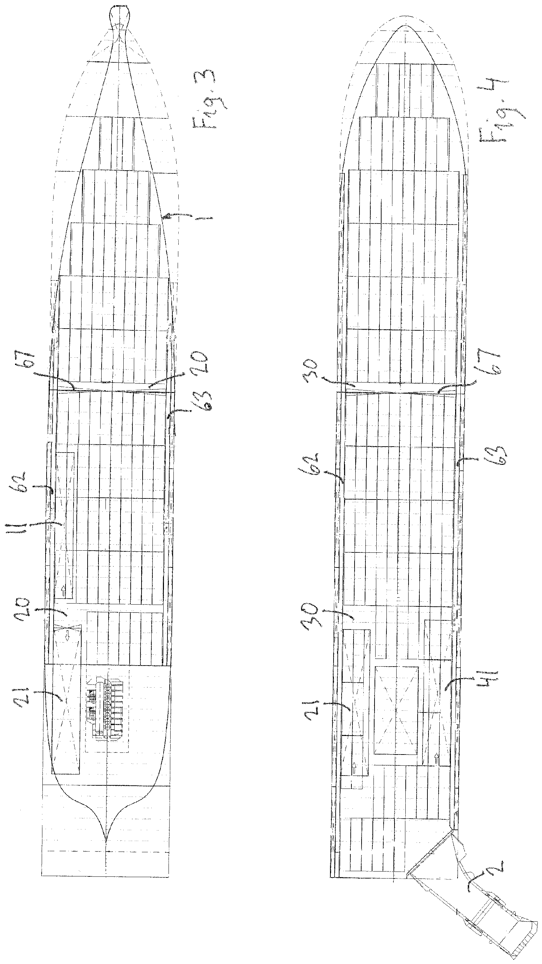

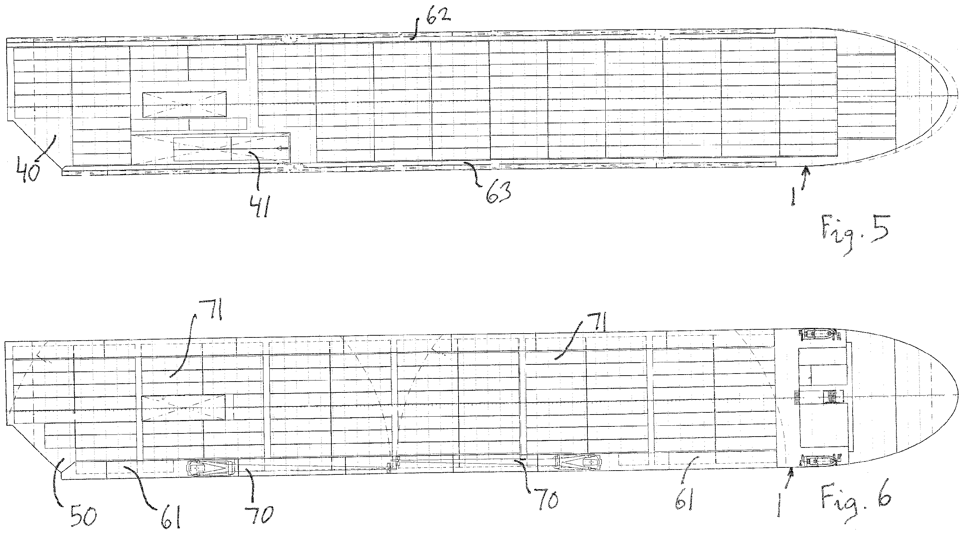

The roll-on/roll-off ramp 2 provides direct access to the third cargo deck 30 as may also be seen in Fig. 4 and the first deck 10, second deck 20 and fourth cargo deck 40 can be reached via internal ramps 11, 21 and 41, respectively, as may also be seen in Figs. 2-5. In this embodiment the internal ramp 21 interconnecting second and third decks is a fixed ramp, while the other internal ramps 11, 41 are lowerable. The fixed ramp is provided with hatches, or the ramps are provided with hatches, which allow the storing of cargo on the areas occupied by the ramps when not in use.

Other constellations of the internal ramps 11, 21, 41 as well as the roll-on/roll-off ramp 2 are of course also possible, but the stability of the vessel and optimisation of the loading has to be observed. Likewise, it is possible to provide elevators instead of ramps, at least on some decks, but this will usually not be feasible due to the relative logistic inefficiency and the need for maintenance.

The operations of the roll-on/roll-off ramp 2 as well as the movable ramps 11, 41 are achieved with hydraulics in a manner well known to persons skilled in the art and will therefore not be described in further detail here.

Cargo is taken onboard by means of transport drive units 100, such as truck engine units provided with a trailer for lifting platforms or provided with a coupling part for platforms in case these are mobile and have their own wheels in the back end and a coupling part in the front end. In the embodiment shown in Figs. 1-5 the roll-on/roll-off ramp 2 has a width of approximately 6.5 m, a length of approximately 29 m and in the lowered, active position an angle of 0-7 degrees in relation to horizontal, depending on the quay height and the draught of the vessel. The internal ramps are somewhat narrower and longer, such as having a width of approximately 6 m and a length of approximately 32 m, and angled at approximately 8 degrees in relation to the cargo deck in the mode of operation.

The ramps are made of a durable and skid proof material, such as profiled steel plates, and various surface coatings such as paint may be applied as is well known to persons skilled in the art.

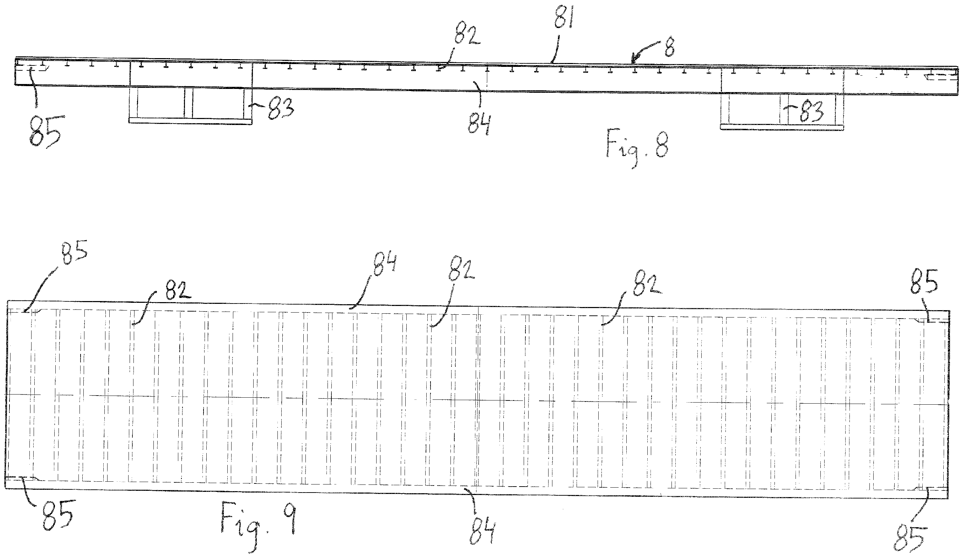

According to the invention the cargo is taken onboard on platforms 8, which are load carriers made with means for ventilation in the form of through-going holes. The individual platform is sized to carry multiple pallets, such as at least 10 pallets, e.g. 20 pallets. An example of such a platform is shown in Figs. 8-10. As may be seen, the upper surface 81 of the platform is in the form of a grate, with I-profile bars 82 spanning the entire width of the platform. It is, however, also possible to use a grid-like structure with bars crossing each other, a perforated plate or the like. The upper surface may be made from galvanized steel, aluminium, plastic or other materials capable of withstanding wear, water contact and the load from the cargo placed on the platform.

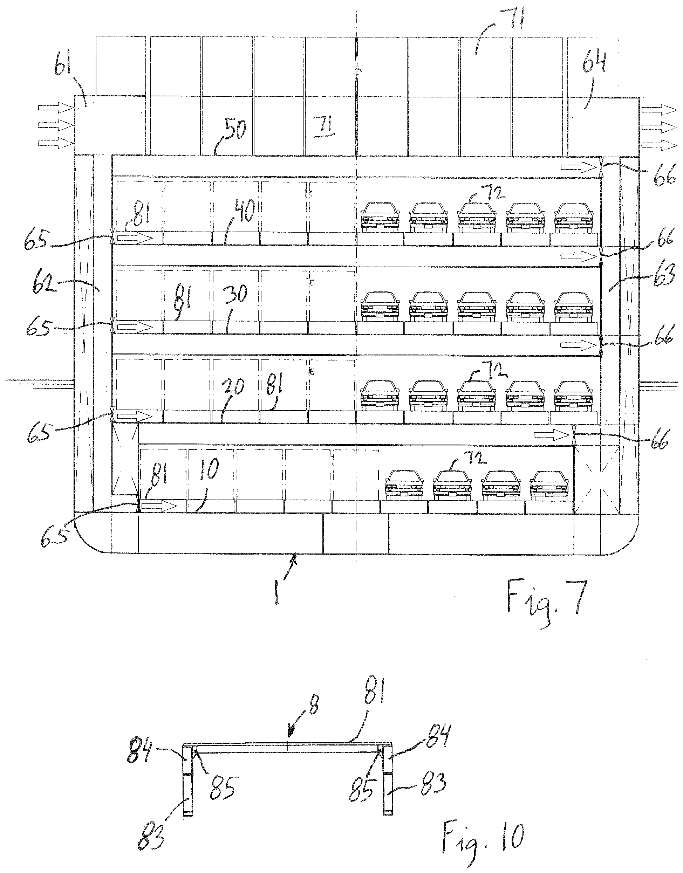

In the embodiment shown, the platform is downwards open and resting on four legs 83 as may be seen in Figs. 8 and 10. In this way the platform is kept elevated above the surface on which it rests. On shore or on the vessel the legs allow easy access for trucks and like transporters, such as transport drive units with a trailer that can be rolled in between the legs 83 and be positioned under the platform for lifting the same. On the vessel the legs provide a space between the deck and the surface of the platform and this space allows very efficient ventilation where air/gas is able to be distributed underneath the cargo so that ventilation is performed in an even manner up through all fruit boxes stored on the platforms. In the illustrated embodiment the legs are made from steel profiles, but other embodiments are possible, including for example solid plastic blocks. The legs may in another embodiment be plate-shaped and extend as a side wall along the platform.

If desired, for instance for providing the platform with extra stiffness, it is also possible to provide a second plate-like structure (not shown) serving as the lower surface and giving the platform the shape of a box. This plate-like structure should preferably be a grate or a similarly open structure allowing precipitation to drain through the platform, thereby contributing to keeping the cargo dry when stored temporarily outdoors and during loading and unloading, and water used for cleaning the platform to easily escape. Likewise, any water condensing on the outer side of the cargo should be allowed to drain off, just as dirt and fragments of cargo, packing etc. should preferably be able to pass through the platform.

In the platform illustrated in Figs. 8 and 9, bars 82 forming the upper surface 81 are welded to a pair of longitudinal beams 84, which defines the two side surfaces of the platform and which provides the necessary strength and stiffness to the platform. The beams illustrated are box beams, but I-beams or solid beams may also be employed.

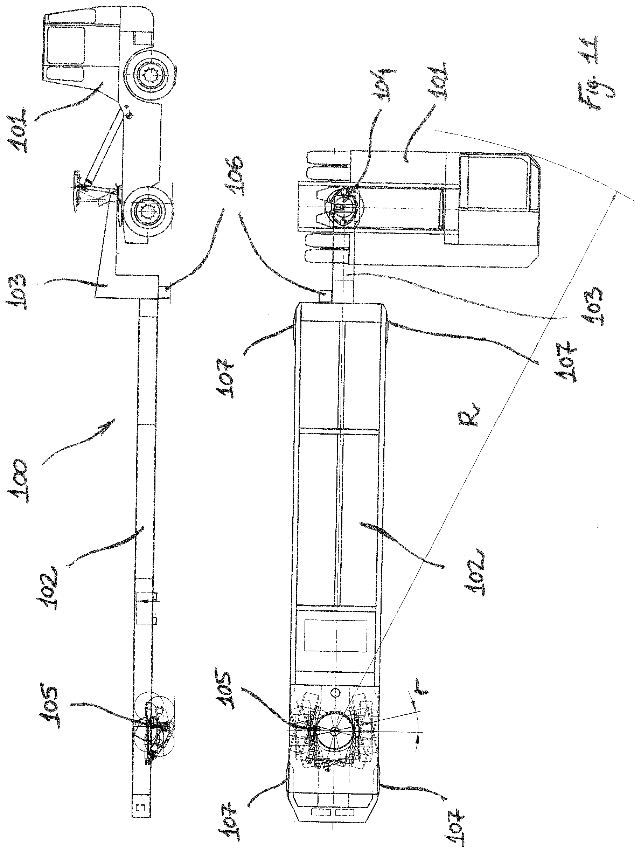

At the end of each beam 84 a bracket 85 is provided for guiding the sides of a trailer while the trailer is moved into the space below the platform by the transport drive unit. As is illustrated in Fig. 11 the back end of the trailer has a wedge-shaped end portion allowing easy insertion under the platform. The brackets 85 assist in positioning the trailer with respect to the platform. When the trailer has been fully inserted under the platform brackets 85 are positioned at corresponding brackets 107 at the front and back end of the side surfaces of the trailer so that the trailer and platform are mutually guided at the four corners at the ends of the platform. When transporting cars 72 these are preferably secured to the platform, such as with lashings or flexible belts secured to the bars 82 forming the grate. The platform may, however, also be provided with separate brackets and/or retainers (not shown) for this use.

The platform shown in Figs. 8-10 is of a both simple and open structure and therefore easy to maintain. If using platforms of a more complex or closed design, they may advantageously be separable, for instance by attaching grates constituting the upper and lower surfaces to a frame by means of bolts or other fastening means such as latches or spring locks.

Regardless of the design chosen, the platform should be sufficiently strong to carry the cargo, sufficiently stiff to not become deformed during transportation, and made from a durable material capable of withstanding both the climate and the wear associated with use in ports, warehouses and onboard reefers.

In order to fit with the common container standards, the platform shown in the drawing has a length of 12.2 m and a width of 2.4 m, corresponding to the dimensions of a 40 foot ISO container, but other sizes and aspect ratios may of course also be employed. The squares shown on Figs. 2-6 indicate platforms of this size.

A transport drive unit, generally designated as 100 in Fig. 11, comprises an engine part 101 and a trailer part 102. The trailer part has a so-called goose-neck 103 with a coupling device at one end for coupling to a corresponding coupling device 104 on the engine part so that the goose-neck may swivel with respect to the engine part. The trailer has a leg 106 at the side of the goose-neck so that it can rest on the ground when de-coupled from engine part 101. The main portion of the trailer part 102 is a flat frame of longitudinal side girders and transverse stiffeners. The stiffeners and girders are of steel profiles welded together into the frame structure. At each corner of the frame a bracket 107 is mounted on the outside of the girder. A set of wheels 105 is mounted at the back end of the frame. There is preferably only a single axle having at either end a wheel or double-wheels or twin-wheels. The wheels are mounted to the frame of the trailer part 102 so that they can turn about a vertical axis as illustrated by "r" in Fig. 11. This turning of the wheels may be controlled by the driver via electrically controlled, hydraulic actuators. In Fig. 11 the radius "R" illustrates that the engine part can turn the entire trailer around a centre positioned at the axis of the wheels 105.

The axle with the wheels may furthermore be mounted on a frame structure that may swing with respect to the frame of the trailer part 102 between an upper position where the wheels are partially retracted in the frame and a lower position. This swinging of the wheels may be controlled by the driver via an electrically controlled, hydraulic actuator. When a platform is to be transported, the wheels 105 are positioned in the upper position and the driver drives rearward with the trailer so that the back end enters below the platform 8 in between the legs at the one of the small ends of the platform. The driver then continues to move the frame of trailer part 102 in below the platform until the brackets 107 are located at the brackets 85 on the platform, and then the wheels 105 are activated to swing into the lower position so that the frame is lifted and contacts the lower side of the platform 8 and lifts the platform off the ground or deck. Other means of lifting the platform may be used, such as hydraulically lifted plates on the upper side of frame 102.

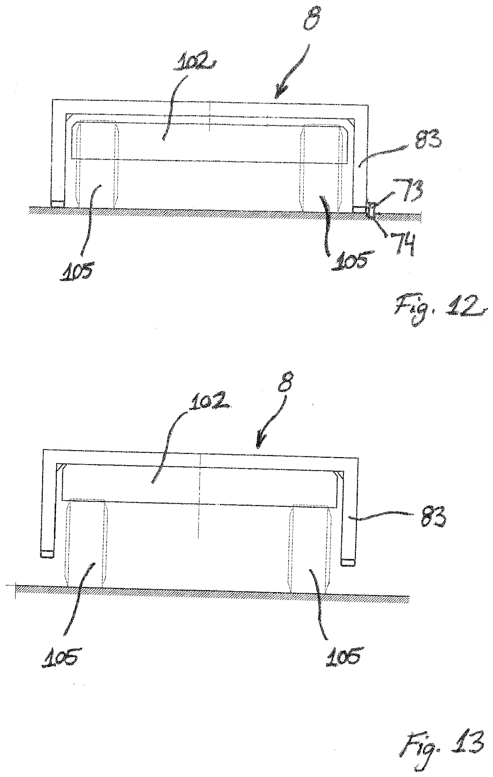

Fig. 12 depicts a trailer with the frame of the trailer part 102 inserted under the platform 8, while the platform is standing on the ground on the quay or on a deck in the vessel, and Fig. 13 depicts the same trailer with the frame of the trailer part 102 lifting the platform. When the platform is to be placed at another location after the transport on or off the vessel then the frame of the trailer is lowered into the position of Fig. 12 where the platform is standing supported by its own legs 83.

The transport drive unit is electrically driven by an electromotor provided with power from at least one battery. The battery is exchangeable so that the driver when needed can get a fully charged battery at a charging station located at the port or on the vessel.

On the upper deck 50 a ventilation unit comprising ventilating fans and air conditioning equipment 61 is provided at the side of the vessel possibly supplemented with a gas source for use when an artificial atmosphere, like nitrogen, is used instead of or as a supplement to ambient air. As may be seen in Fig. 7, ambient air is taken in at one side of the vessel (left side in Fig. 7) where it is cooled or heated if necessary and possibly mixed with other gasses. From here the air is passed down along the side of the hull 1 through ventilation ducts 62 and led in through ventilation air supply openings 65 located immediately above the surface of each of the lower decks and having a height, which is preferably lower than the distance up to the upper side 81 of the platform, thus passing the ventilation air underneath and through the platforms. Depending on ventilation requirements, vessel size etc. it is also possible to provided duct extending across the vessel as well as auxiliary fans at each deck.

The air or air mixture is distributed along the surface of the deck and rises up through the cargo and is taken out along the ceiling formed by the deck above as indicated by arrows. From here the air or air mixture flows through exit openings 66 and enters into a second ventilation duct 63 at the opposite side of the vessel (right side in Fig. 7) and is eventually blown out by ventilation equipment 64, which may include a heat exchanger and/or a gas recovery unit.

Only a single set of ventilation units has been described, but in other embodiments several sets may be employed depending amongst others on the size and loading capacity of the vessel, on the demands for ventilation and conditioning of the atmosphere, and on the capacity of the units employed. Moreover, the decks may be divided into several individually climate-controlled cargo compartments, such as by being divided by transverse bulkheads 67, which may have access doors being open during loading and unloading. On the lower deck provided with the transverse bulkhead there is thus one ventilation zone 68 forward of the bulkhead and another ventilation zone 69 aft of the bulkhead. It is also possible to use an uneven number of conditioning and ventilating units, where one conditioning unit works with two or more ventilating units or vice versa.

The uppermost cargo deck, here the fifth deck called the weather deck 50, can be reached only from above, i.e. by means of a crane 70. The vessel is provided with two cranes 70 and these may serve the complete weather deck during loading and unloading. It is a distinct advantage that the vessel is equipped with cranes as harbours used for shipping fruit may not have container cranes. The weather deck is intended for containers 71 and can be loaded independently of the lower decks. This means that it is not necessary to postpone the loading of the last containers until the lower decks have been fully loaded, as would be the case with vessel loaded through a hatch in the upper deck, and likewise, cargo can be unloaded from the lower decks without first having to unload cargo from the upper deck. As the load for intercontinental traffic is very often taken on board in two or more different ports and subsequently unloaded following a similar pattern, this is a considerable advantage. Not only does it decrease the time needed for loading and unloading, it also allows more freedom with regards to the relative positioning of the containers on the upper deck. The weather deck 50 is equipped for containers and is thus provided with support structures with fittings for receiving and locking the corners of the containers in a lower-most layer of containers, and with lashings for securing container corners higher up in a stack of containers, such as the corners of the containers in the uppermost layer of containers - or the upper container in the individual stack. There are also corner locks to interlock container corners within the container stack. Such equipment is standard in container vessels working on the principle that the containers are lifted onboard the vessel, as it is done in the present vessel, e.g. by the cranes on the deck.

An example of fruit commonly transported on reefers is bananas. Export bananas are picked green, and packed in boxes, which are then arranged on pallets. A standard pallet contains 48 boxes, but in recent years the high-cube standard with 54 boxes on each pallet has become widely used.

From the farm the bananas are usually transported on refrigerated trucks to warehouses at or near a harbour, where they await the arrival of the reefer vessel. Bananas are transported and stored at temperatures of between 13 and 15 °C, where the ripening process is almost entirely stalled, and on board the reefer vessel the atmosphere surrounding them is preferably modified or controlled, meaning a partial or total replacement of the ambient air with gas, respectively. This contributes to the stalling of the ripening process and may further kill off any vermin and fungus.

Once approaching the destination, the temperature may be raised to about 17 °C and a low concentration of ethylene, which is the natural ripening agent of bananas, may be added to the atmosphere. After a few days, the fruit is ready for being distributed for final sale. Performing this ripening operation at sea allows for the bananas to be taken directly to the supermarkets, but necessitate the use of vessels, where the atmosphere can be controlled or modified. When transporting the bananas on simpler refrigerated-cargo vessels, they are placed in special ripening rooms on shore before being taken to the point of sale.

Other fruits, like avocados, peaches, oranges, apples, kiwis, pineapples etc., and vegetables may be transported at other temperatures and with the addition of other ripening agents, but the overall principle is the same.

The vessel may have a number of dummy-platforms for filling out a row in case the platforms loaded onto the vessel do not form complete rows. There may also be used inflatable bags to close one or more voids in a row. As schematically illustrated in Fig. 12 the lower decks may be provided with retainers 74 for fixation of the platforms in the longitudinal direction of the vessel. The retainers may for example be a recess in the surface of the deck. The individual platform may be provided with a projection 73, which can engage with the retainer 74 in the deck.

Variations of the above-mentioned embodiments are possible within the scope of the appended patent claims. As an example the vessel may be equipped with only a single crane for containers or with three cranes for containers, or container cranes may be dispensed with, if the harbours of relevance has the desired container crane capacity for serving the vessel. The vessel may have more decks for receiving platforms, and the decks may have other layouts, such as a layout with side ramps or with side doors for used with harbours equipped with ramps suitable for the vessel.

## Claims

1. A refrigerated-cargo vessel for transporting fruit and like foodstuffs, said vessel having a roll-on/roll-off ramp (2) and a plurality of decks (10, 20, 30, 40, 50) including an upper weather deck (50), and two or more lower decks (10, 20, 30, 40) for receiving palletised cargo, where at least an area of the lower decks (10, 20, 30, 40) is provided with grating allowing ventilation of cargo placed on the grating, wherein the upper weather deck (50) is equipped for receiving containers (71), and that the grating is part of removable cargo platforms (8) transportable via the ramp (2) by transport drive units (100), each platform (8) comprising at least an upper surface (81), side surfaces, and legs (83) or wheels, which upper surface (81) and optionally at least one of the side surfaces comprise through-going ventilation openings, wherein the cargo platforms (8) are located immediately next to one another in rows extending in the transverse direction of the vessel and more than half, and possibly up to all, of the cargo platforms (8) in the rows are transported in the vessel without using transverse lashings for securing the individual platform (8) during the transport, **characterised in that** the vessel has at least one ventilation system, which from one hull-side of the decks (10, 20, 30, 40) has ventilation air supply openings (65) in the areas between the upper side of the deck (10, 20, 30, 40) and the upper surface (81) of platforms (8) located on the same deck (10, 20, 30, 40).

2. A refrigerated-cargo vessel according to claim 1, wherein the openings in the upper surface (81) of the platforms (8) are distributed substantially evenly.

3. A refrigerated-cargo vessel according to claim 1 or 2, wherein the surface of any of the lower decks (10, 20, 30, 40) is provided with retainers (74) for fixation of the platforms (8) in the longitudinal direction of the vessel, and that the individual platform (8) is provided with a projection (73) which can engage with the retainer (74) in the deck (10, 20, 30, 40).

4. A refrigerated-cargo vessel according to any of claims 1-3, wherein the free height from the deck (10, 20, 30, 40) surface to fixed structures above the deck (10, 20, 30, 40) is in the range between 2.8 and 3.7 m in the lower decks (10, 20, 30, 40), such as in the range between 3.3 and 3.7 m, in the range between 2.8 and 3.2 m, or in the range between 3.0 to 3.3 m.

5. A refrigerated-cargo vessel according to any of claims 1-4, wherein either a hatch is provided at the opening above one or more internal ramps (11, 21, 41), or the upper weather deck (50) is without hatches and that internal ramps (11, 21, 41) interconnect only lower decks (10, 20, 30, 40), so that access to the lower decks (10, 20, 30, 40) is independent of the upper weather deck (50) and vice versa.

6. A refrigerated-cargo vessel according to any of claims 1-5, wherein the vessel is in intercontinental charter transporting fruit, such as bananas, loaded on the platforms (8), and containers (71) with either fruits or other cargo from a first continent to a second continent, and transporting cars (72) loaded on the platforms (8), and possible other cargo in the containers (71), from the second continent to the first continent.

7. A refrigerated-cargo vessel according to any of claims 1-6 and comprising at least three lower decks (10, 20, 30, 40), including a bottom deck (10), a top deck (40) and one or more intermediate decks (20, 30), where the roll-on/roll-off ramp (2) gives access to one of the intermediate decks (20, 30).

8. A refrigerated-cargo vessel according to any of claims 1-7, wherein the lower decks (10, 20, 30, 40) are separated into at least two different ventilation zones (68, 69), preferably by transverse bulkheads (67) that may have doors or be partly or wholly retractable during loading or unloading.

## Patentansprüche

1. Gekühltes Frachtschiff zum Transportieren von Obst und ähnlichen Nahrungsmitteln, wobei das Schiff eine Roll-on-roll-off-Rampe (2) und eine Vielzahl von Decks (10, 20, 30, 40, 50) aufweist, die ein oberes Wetterdeck (50) beinhalten, und zwei oder mehr tiefere Decks (10, 20, 30, 40) zum Aufnehmen palettisierter Fracht, wobei mindestens eine Fläche der tieferen Decks (10, 20, 30, 40) mit einem Gitter versehen ist, das eine Ventilation von Fracht gestattet, die auf dem Gitter platziert ist, wobei das obere Wetterdeck (50) zum Aufnehmen von Containern (71) ausgestattet ist, und wobei das Gitter Teil entfernbarer Frachtplattformen (8) ist, die über die Rampe (2) durch Transportantriebseinheiten (100) transportierbar sind, wobei jede Plattform (8) mindestens eine obere Oberfläche (81), seitliche Oberflächen und Beine (83) oder Räder umfasst, wobei die obere Oberfläche (81) und optional mindestens eine der seitlichen Oberflächen durchgehende Ventilationsöffnungen umfassen, wobei sich die Frachtplattformen (8) unmittelbar nebeneinander in Reihen befinden, die sich in einer Querrichtung des Schiffs erstrecken, und mehr als die Hälfte und möglicherweise maximal alle Frachtplattformen (8) in den Reihen in dem Schiff, ohne Verwendung von Querverzurrung zum Sichern der einzelnen Plattform (8) während des Transports, transportiert werden, **dadurch gekennzeichnet, dass** das Schiff mindestens ein Ventilationssystem aufweist, welches von einer Rumpfseite der Decks (10, 20, 30, 40) Ventilationsluft-Versorgungsöffnungen (65) in den Bereichen zwischen der Oberseite des Decks (10, 20, 30, 40) und der oberen Oberfläche (81) von Plattformen (8), die sich auf demselben Deck (10, 20, 30, 40) befinden, aufweist.

2. Gekühltes Frachtschiff nach Anspruch 1, wobei die Öffnungen in der oberen Oberfläche (81) der Plattformen (8) im Wesentlichen gleichmäßig verteilt sind.

3. Gekühltes Frachtschiff nach Anspruch 1 oder 2, wobei die Oberfläche von jeglichen der tieferen Decks (10, 20, 30, 40) mit Halterungen (74) zum Befestigen der Plattformen (8) in der Längsrichtung des Schiffs versehen ist, und die einzelne Plattform (8) mit einem Vorsprung (73) versehen ist, der mit dem Halter (74) in dem Deck (10, 20, 30, 40) in Eingriff gelangen kann.

4. Gekühltes Frachtschiff nach einem der Ansprüche 1-3, wobei die freie Höhe von der Oberfläche des Decks (10, 20, 30, 40) zu befestigten Strukturen über dem Deck (10, 20, 30, 40) in dem Bereich zwischen 2,8 und 3,7 m in den tieferen Decks (10, 20, 30, 40), beispielsweise in dem Bereich zwischen 3,3 und 3,7 m, in dem Bereich zwischen 2,8 und 3,2 m oder in dem Bereich zwischen 3,0 und 3,3 m liegt.

5. Gekühltes Frachtschiff nach einem der Ansprüche 1-4, wobei entweder eine Luke an der Öffnung über einer oder mehreren internen Rampen (11, 21, 41) bereitgestellt ist oder das obere Wetterdeck (50) ohne Luken ist und interne Rampen (11, 21, 41) nur tiefere Decks (10, 20, 30, 40) verbinden, sodass ein Zugang zu den tieferen Decks (10, 20, 30, 40) unabhängig von dem oberen Wetterdeck (50) und umgekehrt ist.

6. Gekühltes Frachtschiff nach einem der Ansprüche 1-5, wobei das Schiff im internationalen Charterverkehr Obst transportiert, beispielsweise Bananen, die auf die Plattformen (8) geladen werden, und Container (71) mit entweder Obst oder anderer Fracht von einem ersten Kontinent zu einem zweiten Kontinent, und Fahrzeuge (72) transportiert, die auf den Plattformen (8) verladen sind, und möglicherweise andere Fracht in den Containern (71) von dem zweiten Kontinent zu dem ersten Kontinent.

7. Gekühltes Frachtschiff nach einem der Ansprüche 1-6, das mindestens drei tiefere Decks (10, 20, 30, 40) umfasst, die ein unteres Deck (10), ein oberes Deck (40) und ein oder mehrere Zwischendecks (20, 30) beinhalten, wobei die Roll-on-roll-off-Rampe (2) Zugang zu einem der Zwischendecks (20, 30) gibt.

8. Gekühltes Frachtschiff nach einem der Ansprüche 1-7, wobei die tieferen Decks (10, 20, 30, 40) in mindestens zwei unterschiedliche Ventilationszonen (68, 69) getrennt sind, vorzugsweise durch quer verlaufende Schottwände (67), die Türen haben können oder während des Ladens oder Entladens teilweise oder vollständig zurückziehbar sind.

## Revendications

1. Navire frigorifique destiné au transport de fruits et de denrées alimentaires similaires, ledit navire ayant une rampe de roulage (2) et une pluralité de ponts (10, 20, 30, 40, 50) comportant un pont exposé supérieur (50) et deux ou plus de deux ponts inférieurs (10, 20, 30, 40) destinés à recevoir une cargaison palettisée, au moins une zone des ponts inférieurs (10, 20, 30, 40) étant dotée d'une grille permettant la ventilation de la cargaison placée sur la grille, dans lequel le pont exposé supérieur (50) est équipé pour recevoir des conteneurs (71), et la grille fait partie de plates-formes de cargaison amovibles (8) pouvant être transportées par le biais de la rampe (2) par des unités d'entraînement de transport (100), chaque plate-forme (8) comprenant au moins une surface supérieure (81), des surfaces latérales et des pieds (83) ou des roues, laquelle surface supérieure (81) et éventuellement au moins l'une des surfaces latérales comprennent des ouvertures de ventilation traversantes, dans lequel les plates-formes de cargaison (8) sont situées de manière immédiatement adjacente les unes aux autres en rangées s'étendant dans la direction transversale du navire, et plus de la moitié et éventuellement jusqu'à la totalité des plates-formes de cargaison (8) dans les rangées sont transportées dans le navire sans utiliser d'amarres transversales pour arrimer la plate-forme individuelle (8) pendant le transport, **caractérisé en ce que** le navire a au moins un système de ventilation, lequel, à partir d'un côté coque des ponts (10, 20, 30, 40), a des ouvertures d'alimentation en air de ventilation (65) dans les zones entre le côté supérieur du pont (10, 20, 30, 40) et la surface supérieure (81) de plates-formes (8) situées sur le même pont (10, 20, 30, 40) .

2. Navire frigorifique selon la revendication 1, dans lequel les ouvertures dans la surface supérieure (81) des plates-formes (8) sont distribuées sensiblement uniformément.

3. Navire frigorifique selon la revendication 1 ou 2, dans lequel la surface de n'importe lequel des ponts inférieurs (10, 20, 30, 40) est dotée d'éléments de retenue (74) servant à la fixation des plates-formes (8) dans la direction longitudinale du navire, et la plate-forme individuelle (8) est dotée d'une saillie (73) qui peut venir en prise avec l'élément de retenue (74) dans le pont (10, 20, 30, 40).

4. Navire frigorifique selon l'une quelconque des revendications 1 à 3, dans lequel la hauteur libre à partir de la surface de pont (10, 20, 30, 40) jusqu'à des structures fixes au-dessus du pont (10, 20, 30, 40) est la plage comprise entre 2,8 et 3,7 m dans les ponts inférieurs (10, 20, 30, 40), par exemple dans la plage comprise entre 3,3 et 3,7 m, dans la plage comprise entre 2,8 et 3,2 m, ou dans la plage comprise entre 3,0 et 3,3 m.

5. Navire frigorifique selon l'une quelconque des revendications 1 à 4, dans lequel soit une écoutille est prévue au niveau de l'ouverture au-dessus d'au moins une rampe interne (11, 21, 41), soit le pont exposé supérieur (50) est dépourvu d'écoutilles et les rampes internes (11, 21, 41) interconnectent seulement des ponts inférieurs (10, 20, 30, 40), de telle sorte que l'accès aux ponts inférieurs (10, 20, 30, 40) soit indépendant du pont exposé supérieur (50) et vice versa.

6. Navire frigorifique selon l'une quelconque des revendications 1 à 5, dans lequel le navire est affrété de manière intercontinentale pour le transport de fruits, tels que des bananes, chargés sur les plates-formes (8), et de conteneurs (71) comprenant soit des fruits soit une autre cargaison, d'un premier continent à un deuxième continent, et pour le transport de voiture (72) chargées sur les plates-formes (8), et d'une autre cargaison éventuelle dans les conteneurs (71), du deuxième continent au premier continent.

7. Navire frigorifique selon l'une quelconque des revendications 1 à 6 et comprenant au moins trois ponts inférieurs (10, 20, 30, 40), comportant un pont le plus bas (10), un pont supérieur (40) et un ou plusieurs ponts intermédiaires (20, 30), la rampe de roulage (2) donnant accès à l'un des ponts intermédiaires (20, 30).

8. Navire frigorifique selon l'une quelconque des revendications 1 à 7, dans lequel les ponts inférieurs (10, 20, 30, 40) sont séparés en au moins deux zones de ventilation (68, 69) différentes, de préférence par des cloisons transversales (67) qui peuvent avoir des portes ou peuvent être partiellement ou complètement rétractées pendant le chargement ou le déchargement.
